# EUROPEAN PATENT SPECIFICATION

(11) **EP 2 965 707 B1**
(45) Date of publication and mention of the grant of the patent: **13.01.2021**
(21) Application number: 14760319.5
(22) Date of filing: 05.03.2014
(51) Int. Cl.: A61C 1/08, A61C 1/12, A61C 17/02, A61C 3/025

(54) **DENTAL HANDPIECE HAVING NOZZLE CONNECTION STRUCTURE**
DENTALES HANDSTÜCK MIT DÜSENVERBINDUNGSSTRUKTUR
PIÈCE À MAIN DENTAIRE AYANT UNE STRUCTURE DE LIAISON DE BUSE

(30) Priority: 07.03.2013 JP 2013045878
(43) Date of publication of application: 13.01.2016
(73) Proprietor: Nakanishi Inc., Kanuma-shi, Tochigi 322-8666 (JP)
(72) Inventor: YAMANE Chihiro, Kanuma-shi Tochigi 322-8666 (JP); TAKAMORI Shouichi, Kanuma-shi Tochigi 322-8666 (JP); SUZUKI Tetsuji, Kanuma-shi Tochigi 322-8666 (JP); KAWAKUBO Kiyoshi, Kanuma-shi Tochigi 322-8666 (JP)
(74) Representative: HWP Intellectual Property
(86) International application number: PCT/JP2014/055656
(87) International publication number: WO 2014/136846

(56) References cited:
- WO-A1-2012/004505
- JP-A- H10 179 617
- JP-A- S60 193 454
- JP-A- S60 193 454
- JP-A- 2001 293 009
- JP-A- 2001 293 014
- JP-A- 2004 536 661
- JP-A- 2006 503 624
- JP-A- 2007 533 333
- JP-U- S60 144 412
- JP-U- S60 144 412
- US-A- 4 950 160
- US-B1- 6 485 303

## Description

The present invention relates to a dental handpiece having a nozzle connection, in particular, a dental handpiece having a nozzle connection of a type wherein a nozzle is attached to a handpiece body at its nozzle connection port for injection of a mixture of air and powder together with water.

Dental handpieces are known, which mix air and powder for polishing or cleaning tooth surface, and inject the mixture together with water onto the tooth surface . Dental handpieces of this type are known, for example, from Patent Publication 1, wherein the dental handpiece is composed of a handpiece body and a nozzle. The handpiece body has a container for accommodating powder, an air supply line for supplying air into the container, a mixture transfer line for transferring a mixture of the powder and air to a nozzle, a water supply line for transferring water to the nozzle, and a head (nozzle connector portion) on which the nozzle is attached. The nozzle has a line and an injection port for each of the mixture and the water for separate injection thereof. The nozzle is inserted onto and fit on the head at the tip of the handpiece body, so that the line and the injection port for each of the mixture and the water through the nozzle are brought into communication with the corresponding mixture transfer line and water supply line in the handpiece body. In this way, the mixture of air and powder supplied through the handpiece body is adapted to be injected together with water through the nozzle.

As a nozzle for injecting a mixture of air and powder together with water, there is known a nozzle for use in subgingival treatment, such as disclosed in Patent Publication 2. As disclosed in this publication, a nozzle for subgingival treatment has an end that is formed flat and thin so as to be insertable subgingivally. Examples of a commercial product that are in practical use for general dental or medical institutions include a nozzle entirely made of a resin and 1.62 mm wide and 0.78 mm thick in its end, or a nozzle entirely made of metal and 1.95 mm wide and 0.91 mm thick in its end.

These nozzles are connected at their connecting end to the nozzle connector portion of the handpiece body by means of various securing means, such as insertion of a T-shaped tongue on the handpiece body side into a T-shaped groove on the nozzle side (see Patent Publication 2), or screwing of a male screw on the nozzle side into a female screw on the handpiece body side, so as to transfer water and the mixture of air and powder supplied through the handpiece body through the lines in the nozzle respectively assigned to the water and the mixture, for injection through the respective injection ports, as discussed above.

Patent Publication 1: JP-H10-286268-A

Patent Publication 2: JP-2008-149138-A

The nozzles of this type for use in particular in the subgingival treatment are, as discussed above, formed thin and flat in its end, and secured on the handpiece body by securing means of the insertion or screwing type. With such a structure, in order to insert the end of the nozzle subgingivally and move the nozzle along the tooth surface during the subgingival treatment, the user has to move (swing) the entire handpiece from side to side over a large amplitude, which deteriorates work efficiency.

A dental handpiece is described in JP S60-193454 A. The handpiece comprises a handpiece body having a mixture transfer line for transferring a mixture, and a nozzle connected to the handpiece body for injecting said mixture transferred through the mixture transfer line. The nozzle is also rotatably connected to the handpiece body.

A further dental handpiece is described in JP S60-144412 U. This handpiece also comprises a handpiece body having a mixture transfer line for transferring the mixture, and a nozzle connected to the handpiece body for injecting the mixture transferred through said mixture transfer line. Again, the nozzle is rotatably connected to the handpiece body.

The present invention aims to solve such problems of the prior art. It is an object of the present invention to provide a dental handpiece having a nozzle connection of this type, wherein the nozzle, with its end being inserted subgingivally, may be moved along the tooth surface for subgingival treatment, without the necessity for the entire handpiece to be moved from side to side over a wide amplitude, to thereby improve work efficiency in dental treatment.

For achieving the above object, according to the present invention, there is provided a dental handpiece for performing dental treatment by injecting a mixture of air and powder onto tooth surface according to the independent claim 1. Preferred embodiments result from the following description and the drawings .

The handpiece comprising a handpiece body having a mixture transfer line for transferring a mixture of air and powder, and a nozzle connected to said handpiece body for injecting said mixture transferred through said mixture transfer line,
wherein said nozzle is rotatably connected to said handpiece body via rotary means.

According to an example not formingpart of the present invention, said rotary means comprises:
a tubular member rotatably connected to the handpiece body at one end and fixed to the nozzle at the other end,
a mounting member fixed to the handpiece body and rotatably receiving said tubular member therethrough, and
a nozzle attachment fixed to said nozzle and rotatably receiving said tubular member therethrough.

According to the present invention, said rotary means comprises:
a tubular member rotatably connected to the handpiece body at one end and fixed to the nozzle at the other end,
a nozzle attachment fixed to the handpiece body and receiving said tubular member therethrough, and
a nozzle attachment connecting portion formed integrally with said nozzle, wherein said nozzle attachment connector portion is formed in a connector portion in said nozzle, wherein said nozzle attachment has a guide portion, and said nozzle attachment connector portion has a guide dent, wherein a guiding projection is provided on the outer surface of said guide portion, and a circumferential guide groove is provided in the inner surface of said guide dent, and said guide portion of the nozzle attachment is rotatably fit in said guide dent of the nozzle attachment connector portion by means of engagement between said guide groove in the nozzle attachment connector portion and said guiding projection of the guide portion, through engaging keyways formed at two opposite positions in the inner surface of the guide dent and extending axially from an edge of an opening to the guide groove.

With the dental handpiece according to the present invention, wherein the nozzle is rotatably connected to the handpiece body, the nozzle may be adjusted, by rotation, to an appropriate angle with respect to the tooth surface. Thus the user, during subgingival treatment with the nozzle being inserted subgingivally at its end and moved along the tooth surface at a treatment site, may easily adjust, by rotation, the angle of the nozzle with respect to the tooth surface at the treatment site, without the necessity for moving the entire handpiece from side to side over a wide amplitude as in the prior art, to thereby improve work efficiency in dental treatment.
Fig. 1 is a side view of an example of a dental handpiece.
Fig. 2 is a side sectional view showing the nozzle connection in the handpiece of Fig. 1.
Fig. 3 is an exploded side sectional view showing the parts of the nozzle connection in the handpiece of Fig. 1.
Fig. 4 shows partially-enlarged perspective views of the nozzle of the handpiece of Fig. 1, particularly the injection ports for the mixture and water, wherein Fig. 4(a) is a view seen from the front side of the nozzle, and Fig. 4(b) is a view seen from the rear side of the nozzle.
Fig. 5 shows the flow of the mixture injected through the nozzle of the handpiece of Fig. 1.
Fig. 6 shows a variation of part of the nozzle connection in the handpiece of Fig. 1, wherein Fig. 6(a) is a side view thereof and Fi. 6(b) is a partially-enlarged side sectional view thereof .
Fig. 7 is a side view of an embodiment of the dental handpiece according to the present invention.
Fig. 8 is a side sectional view showing the nozzle connection in the handpiece of Fig. 7.
Fig. 9 is an exploded side sectional view showing the parts of the nozzle connection in the handpiece of Fig. 7.

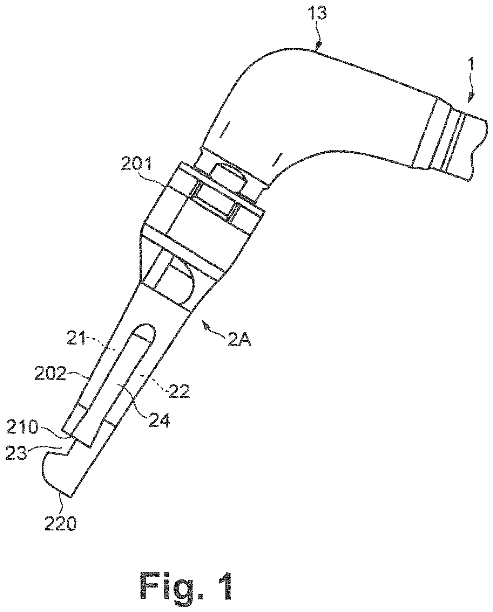

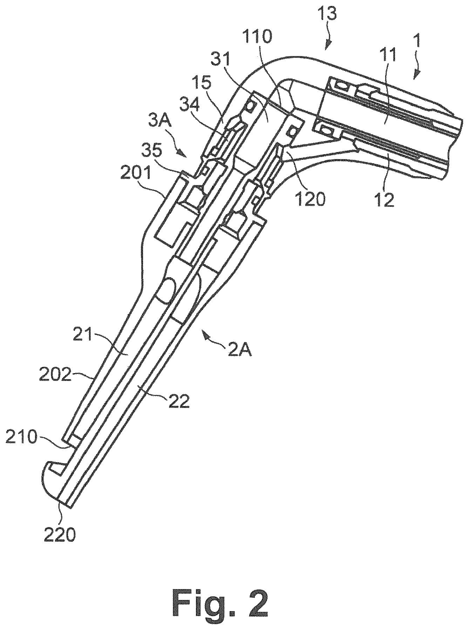

The present invention will now be explained in detail with reference to the attached drawings. Figs. 1 to 5 show an example of the dental handpiece not forming part of the present invention. Referring to Figs. 1 and 2, the dental handpiece is composed of handpiece body 1 and nozzle 2A connected to an end of the handpiece body. The handpiece body 1 has mixture transfer line 11 and outlet 110 thereof for transferring a mixture of air and powder, and water transfer line 12 and outlet 120 thereof for transferring water. The mixture transfer line 11 is arranged along the central axis of the handpiece body, and the water transfer line 12 is arranged around the mixture transfer line to form a double tube. The nozzle 2A has channel 21 and injection port 210 thereof for the mixture, and channel 22 and injection port 220 thereof for water, independent from each other. By connecting the nozzle 2A to the end of the handpiece body 1, the outlet 110 of the mixture transfer line and the outlet 120 of the water transfer line in the handpiece body 1 are brought into communication with the mixture channel 21 and the water channel 22, respectively in the nozzle 2A.

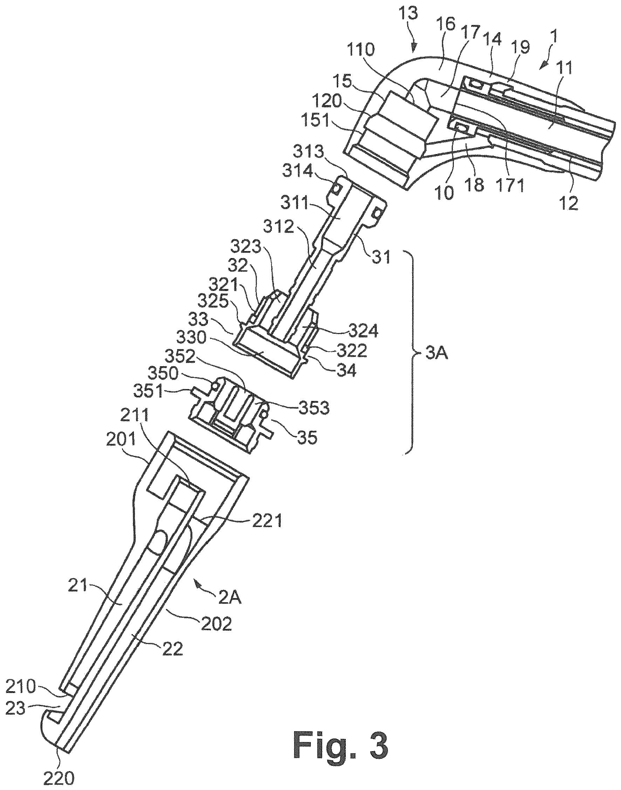

Referring to Fig. 3, the handpiece body 1 has head 13 in the end to which the nozzle is connected. The head 13 is composed of a substantially L-shaped pipe, and has upstream connection port 14 for connection to the mixture transfer line 11 and the water transfer line 12, and downstream nozzle connection port 15 for connection to the nozzle 2A. The nozzle connection port 15 has threads 151 formed on its inner surface near the end. The head 13 further has blocking part 16 in the middle between the connection ports 14 and 15 for blocking. Through substantially the center of the blocking part 16, line 17 for the mixture extends to form part of the mixture transfer line 11, which line has inlet 171 communicating to the mixture transfer line 11 and the outlet 110 communicating to the nozzle connection port 15. The blocking part 16 is also provided with line 18 for water extending therethrough and offset from the line 17 for the mixture, forming part of the water transfer line 12. The water line 18 connects water channel 19 formed as a circumferential groove in the inner surface of the upstream connection port 14 and the outlet 120 of the water transfer line formed as a circumferential groove in the inner surface of the nozzle connection port 15, into communication at respectively predetermined axial positions. O-ring 10 is disposed in the upstream connection port 14 to make the head 13 water-tight with respect to the water transfer line 12.

The nozzle 2A is for use in subgingival treatment, and has connector portion 201 to the handpiece body 1 on the upstream side, formed correspondingly to the end of the head 13, and nozzle body 202 contiguously extending from the connector portion 201 on the downstream side, and formed thin and flat so as to be insertable between the tooth surface and the gingival margin. The connector portion 201 is generally in a cylindrical form with an axial dent, and is provided with mixture inlet 211 for passing the mixture substantially in the center of the bottom of the axial dent, and with water inlet 221 for passing water around the mixture inlet 211. The nozzle body 202 is formed thin and flat such that the external width and thickness are gradually tapered from the connector portion 201, and in this example in particular, formed flat in the transverse direction.

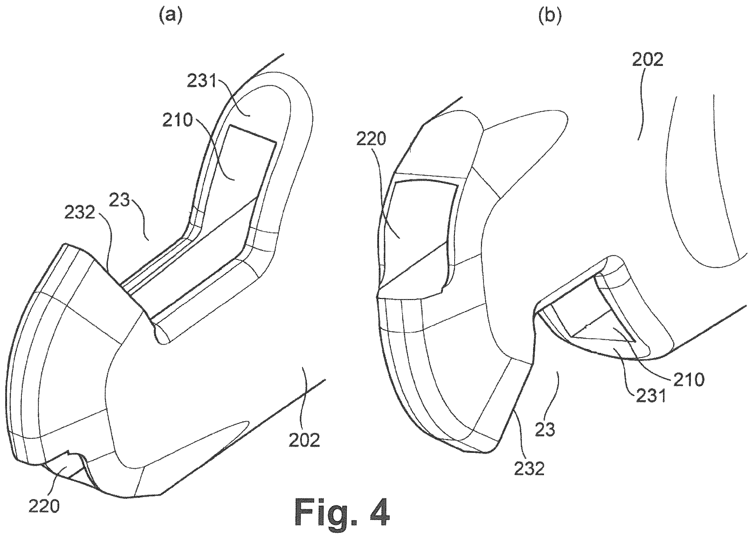

Near the end of the nozzle body 202, notch 23 of a substantially rectangular section is cut out from the front face into two lateral faces of the nozzle body 202, forming upstream face 231 and downstream face 232. As shown in Fig. 4, the upstream face 231 and the downstream face 232 of the notch 23 are formed as slanted faces at an appropriate angle with respect to each other, flaring from the inside to the outside of the nozzle body 202.

The channel 21 for the mixture extends linearly in the axial direction through the nozzle body 202 along the front surface from the inlet 211 located in the connector portion 201 down to near the end, and ends in the injection port 210 opened in the notch 23, in particular in the upstream face 231, as an outlet. The upstream face 231 functions as a guide for allowing the mixture injected through the injection port 210 to flow spragingivally, whereas the downstream face 232 functions as a guide for receiving and guiding the mixture injected through the injection port 210 beyond the notch 23. In each of the two lateral faces of the nozzle body 202, as shown in Fig. 1, groove 24 of a semicircular section is formed extending axially from near the notch 23 toward the connector portion 201, and functions as a guide for allowing the mixture injected through the injection port 210 to flow spragingivally.

The water channel 22 extends axially through the nozzle along the rear face from the water inlet 221 located in the connector portion 201, and ends in the injection port 220 opened in the end face of the nozzle body 202 as an outlet.

The connection between the handpiece body 1 and the nozzle 2A having the structure discussed above includes rotary means 3A disposed between the nozzle connection port 15 of the handpiece body 1 and the connector portion 201 of the nozzle 2A, so that the nozzle 2A is rotatably connected to the handpiece body 1 via the rotary means 3A.

Referring to Fig. 3, the rotary means 3A includes tubular member 31 which is rotatably arranged at its upstream end in the nozzle connection port 15 in the head 13 of the handpiece body 1, and fixed at its downstream end to the mixture channel 21 in the nozzle 2A; mounting member 34 fixed in the nozzle connection port 15 and rotatably receiving the tubular member 31 therethrough; and nozzle attachment 35 fixed in the connector portion 201 of the nozzle 2A and rotatably receiving the tubular member 31 therethrough.

The tubular member 31 is formed longer as a whole than the axial length of the nozzle connection port 15, and the rotary means 3A, when assembled, extends out of the nozzle connection port 15. The tubular member 31 has first pipe 311 brought into communication with the outlet 110 of the mixture transfer line in the head 13, and second pipe 312 having a smaller diameter than and continuous from the first pipe 311. The second pipe 312 has a diameter equal to or slightly larger than the diameter of the mixture inlet 211 located in the connector portion 201 of the nozzle 2A, and is connected to the inlet 211 for passing the mixture . Ring 313 having substantially the same diameter as the inner diameter of the nozzle connection port 15 is integrally formed at the upstream end of the tubular member 31, and O-ring 314 is fit in the outer circumference of the ring 313. This tubular member 31 is rotatably arranged in the nozzle connection port 15, brought into communication with the outlet 110 of the mixture transfer line, and extends out of the nozzle connection port 15.

The mounting member 34 is composed of annular fixing portion 32 fixed in the nozzle connection port 15 adjacent to the ring 313 of the tubular member 31, and annular guide portion 33 continuously and integrally formed with the fixing portion 32. The outer surface of the fixing portion 32 is threaded, which threads 321 are screwed together with threads 151 in the inner surface of the nozzle connection port 15 for securing. O-ring 322 is fit in the outer surface of the fixing portion 32 near its downstream end. The fixing portion 32 has a double tube structure having tubular member receiving portion 323 in the center for rotatably receiving the tubular member 31, and water channel 324 around the portion 323 for communication with the outlet 120 of the water transfer line for water passage. A water inlet (not shown) for communication with the outlet 120 of the water transfer line in the inner surface of the nozzle connection port 15 is opened in part of the outer circumference of the fixing portion 32 (periphery of the upstream end in this example). The guide portion 33 is contiguous to the downstream-side of the fixing portion 32 via flange 325 extending radially outwardly, has a diameter slightly larger than that of the fixing portion 32, is in an annular form having a certain length, and has hollow 330 for guiding water from the water channel 324 of the fixing portion 32. The mounting member 34 having the structure as discussed above is fixed in the nozzle connection port 15 by screwing together the threads 321 on the fixing portion 32 and the threads 151 in the nozzle connection port 15, with the guide portion 33 arranged outside the nozzle connection port 15 . The tubular member 31 is rotatably inserted through the tubular member receiving portion 323 of the fixing portion 32 and the hollow 330 of the guide portion 33, and water is passed through the water channel 324 in the fixing portion 32 and the hollow 330 of the guide portion 33.

The nozzle attachment 35 on its upstream side has an outer diameter that is slightly smaller than the inner diameter of the guide portion 33, so that the nozzle attachment 35 is rotatably arranged in the guide portion 33 of the mounting member 34, and O-ring 350 is fit in the outer surface of the nozzle attachment 35. The nozzle attachment 35 on its downstream side is in an annular form of a diameter equal to or slightly larger than the inner diameter of the connector portion 201, so that the nozzle attachment 35 is fixedly fit in the connector portion 201 of the nozzle 2A. On the outer surface of the nozzle attachment 35 in the middle of the upstream and downstream sides, flange 351 projecting radially outwardly is formed. The nozzle attachment 35 has a double tube structure having tubular member receiving portion 352 in the center for rotatably receiving the tubular member 31 therein to bring the mixture channel 21 in the nozzle 2A into communication with the tubular member receiving portion 323 of the mounting member 34, and water channel 353 around the portion 352 for bringing the water channel 22 in the nozzle 2A into communication with the water channel 324 of the mounting member 34. The nozzle attachment 35 of such a structure is fit in the connector portion 201 of the nozzle 2A, with the tubular member receiving portion 352 and the water channel 353 brought into communication with the mixture inlet 211 and the water inlet 221, respectively, of the nozzle 2A, and with the flange 351 abutting the edge of the connector portion 201. In this state, the upstream side of the nozzle attachment 35 is rotatably combined with the guide portion 33 of the mounting member 34 to rotatably receive the tubular member 31 therein, and the tubular member receiving portion 323 of the mounting member 34 is brought into communicate with the mixture channel 21 in the nozzle 2A by means of the tubular member receiving portion 352, whereas the water channel 324 of the mounting member 34 is brought into communication with the water channel 22 in the nozzle 2A by means of the water channel 353.

The connection between the handpiece body 1 and the nozzle 2A has such rotary means 3A wherein, in the nozzle connecting port 15 in the head 13 of the handpiece body, the mounting member 34 is fixed, in the guide portion 33 of which the nozzle attachment 35 fixedly fit in the nozzle 2A is fit, and the tubular member 31 is fixedly connected to the mixture channel 21 in the nozzle 2A through the tubular member receiving portion 323 of the mounting member 34 and the tubular member receiving portion 352 of the nozzle attachment 35, to thereby connect rotatably the nozzle 2A to the handpiece body.

With this connection, the tubular member 31, which is brought into communication with the outlet 110 of the mixture transfer line in the nozzle connection port 15 in the head 13 of the handpiece body, extends out of the nozzle connection port 15 and is rotatably supported through the mounting member 34, which is fixed in the nozzle connection port 15 and has the water channel 324 communicating with the outlet 120 of the water transfer line. The tubular member 31 is further brought into communication with and connected, via the nozzle attachment 35, to the mixture channel 21 in the nozzle 2A, and the nozzle attachment 35 fixed to the nozzle 2A is rotatably arranged in the guide portion 33 of the mounting member 34. With this structure, the tubular member 31 forms part of the circuit for introducing the mixture into the mixture channel 21 in the nozzle 2A, whereas the water channels 324 and 353 in the mounting member 34 and the nozzle attachment 35, respectively, arranged around the tubular member 31 form part of the circuit for introducing water into the water channel 22 in the nozzle 2A, so that the circuit for the mixture and the circuit for water are formed independently from each other. The tubular member 31, the nozzle attachment 35, and the nozzle 2A are integrally rotated around one of the two circuits , the tubular member 31, under the rotational guidance of the guide portion 33 of the mounting member 34 and the nozzle attachment 35.

In this way, the nozzle 2A is rotatable independently with respect to the head 13 of the handpiece body 1. Thus, during subgingival treatment, the user, who inserts the end of the nozzle 2A subgingivally and moves the nozzle along the tooth surface at the treatment site, may easily adjust the nozzle 2A to an appropriate angle with respect to the tooth surface at the treatment site by rotating the nozzle 2A, to ensure to direct the mixture injected through the nozzle 2A to the tooth surface at the treatment site.

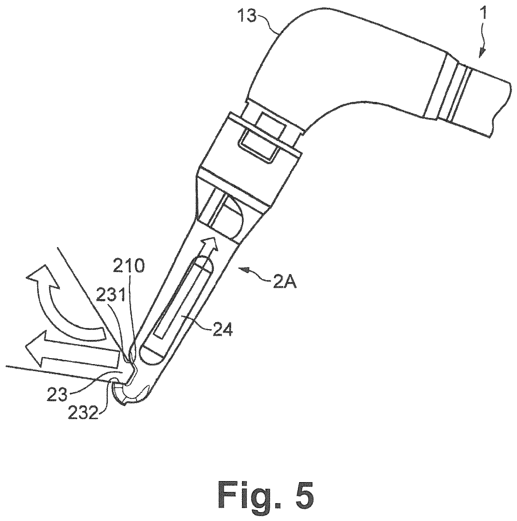

Further, the mixture of air and powder supplied through the mixture transfer line 11 in the handpiece body 1 is injected from the outlet 110 of the mixture transfer line in the head 13, via the tubular member 31 and the mixture channel 21 in the nozzle 2A, out of the mixture injection port 210 of the nozzle 2A. On the other hand, the water supplied through the water transfer line 12 in the handpiece body 1 is injected from the outlet 120 of the water transfer line in the head 13, via the water channel 324 in the fixing portion 32 of the mounting member 34, the water channel 353 in the nozzle attachment 35 arranged in the guide portion 33, and the water channel 22 in the nozzle 2A, out of the water injection port 220 of the nozzle 2A. As shown in Fig. 5, the mixture injected through the mixture injection port 210 of the nozzle 2A is blown beyond the notch 23 under the guidance of the downstream face 232 of the notch 23 facing to the injection port 210, to ensure that the mixture is blown onto a particular area of the treatment site. The mixture injected through the mixture injection port 210 of the nozzle 2A is also ensured to flow spragingivally under the guidance of the upstream face 231 of the notch 23, in which the injection port 210 is opened, as well as the grooves 24 on both lateral faces of the nozzle 2A.

As discussed above, in the dental handpiece having such a nozzle connection, the nozzle 2A is rotatably connected to the nozzle connection port 15 in the handpiece body 1 via the rotary means 3A composed of the tubular member 31, the mounting member 34, and the nozzle attachment 35. Thus, when the nozzle 2A is moved subgingivally along the tooth surface, the nozzle 2A may be adjusted, by rotating, to a proper angle with respect to the tooth surface. Consequently, the user is not required, in the subgingival treatment, to move the entire handpiece from side to side over a wide amplitude unlike the conventional handpiece, and the work efficiency in dental treatment is improved.

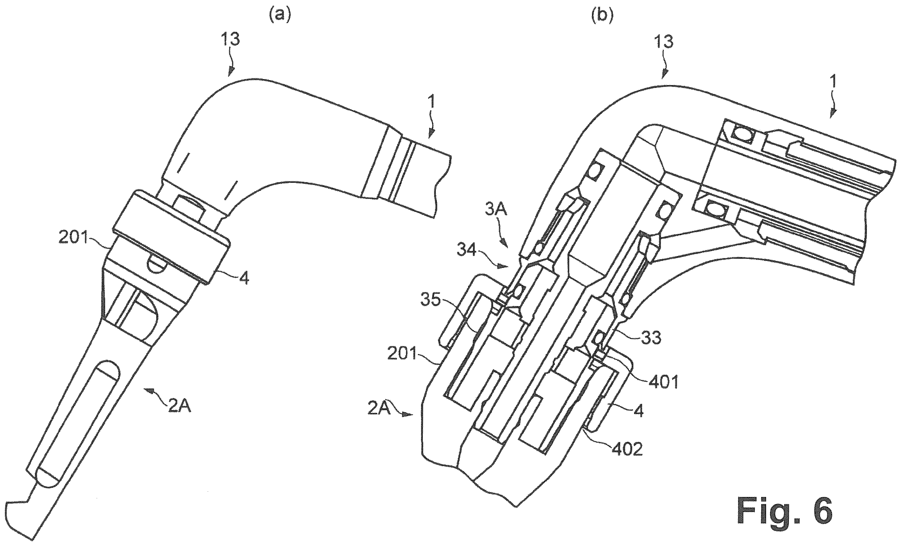

Fig. 6 shows a variation of the example. In this nozzle connection, additional securing cover 4 is used for securing the nozzle 2A. The securing cover 4 is an annular cover capable of pressing the connector portion 201 of the nozzle 2A from the outer surface toward the axial center. This securing cover 4 has, in its upstream end face, opening 401, through which the guide portion 33 of the mounting member 34 may be inserted and, in its downstream end face, opening 402, through which the connector portion 201 of the nozzle 2A may be inserted, so that the cover 4 as a whole is in generally a cylindrical form. The securing cover 4 is arranged over the guide portion 33 of the mounting member 34 and the nozzle attachment 35, with the end face of the ring (surface around the opening 401) engaging the flange 351 of the nozzle attachment 35. With such securing cover 4, the connector portion 201 of the nozzle 2A may be pressed from the outer surface to secure the nozzle 2A and the nozzle attachment 35.

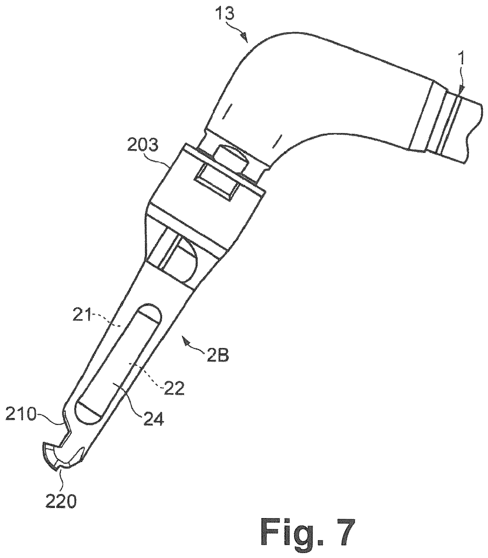

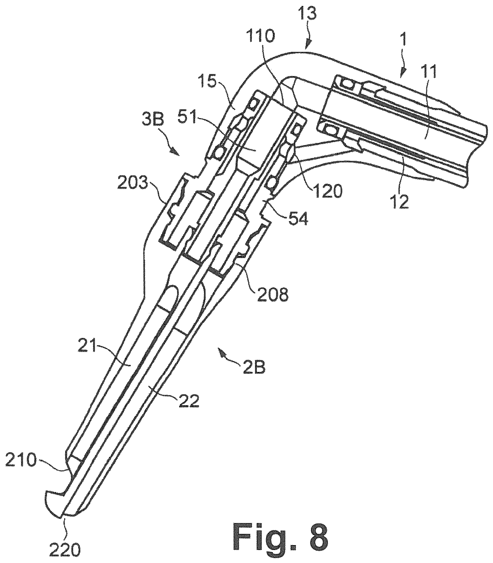

Figs. 7 to 9 show an embodiment of the dental handpiece according to the present invention. Referring to Figs. 7 and 8, the dental handpiece is, like the example, composed of handpiece body 1 and nozzle 2B connected to an end of the handpiece body. The handpiece body 1 has mixture transfer line 11 and outlet 110 thereof for transferring a mixture of air and powder, and water transfer line 12 and outlet thereof 120 for transferring water. The nozzle 2B has channel 21 and injection port 210 thereof for the mixture, and channel 22 and injection port 220 thereof for water, independent from each other. By connecting the nozzle 2B to the end of the handpiece body 1, the outlet 110 of the mixture transfer line and the outlet 120 of the water transfer line of the handpiece body 1 are brought into communication with the mixture channel 21 and the water channel 22, respectively, of the nozzle 2B.

The handpiece body 1 is equivalent to the handpiece body 1 of the example and has the common structure . Parts of the handpiece body 1 that are common with those in the handpiece body 1 of the example are referred to with the same reference signs, and the descriptions thereof are omitted here.

The nozzle 2B is also for use in subgingival treatment as the nozzle 2A of the example, but has connector portion 203 of different structure compared to nozzle 2A, while the nozzle body 202 are the same as in nozzle 2A. Here, the structure of the connector portion 203 of the nozzle 2B will be discussed in combination with the structure of the rotary means 3B to be described later, and parts of the common nozzle body 202 are referred to with the same reference signs as in the nozzle 2A, and the descriptions thereof are omitted here.

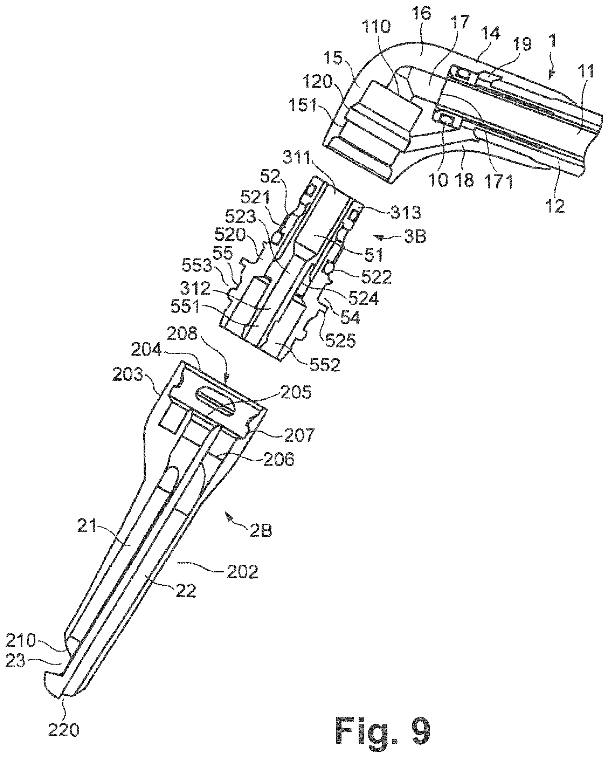

Referring to Fig. 9, the connection between the handpiece body 1 and the nozzle 2B includes rotary means 3B between the nozzle connection port 15 in the handpiece body 1 and the connector portion 203 of the nozzle 2B, and the nozzle 2B is rotatably connected via the rotary means 3B to the nozzle connection port 15 in the handpiece body 1.

The rotary means 3B includes tubular member 51 which is rotatably arranged in the nozzle connection port 15 in the head 13 of the handpiece body 1 at its upstream end, and fixed to the mixture channel 21 in the nozzle 2B at its downstream end; nozzle attachment 54 fixed in the nozzle connection port 15 and rotatably receiving the tubular member 51 therethrough; and nozzle attachment connector portion 208 integrally formed with the connector portion 203 of the nozzle 2B.

The tubular member 51 is equivalent to the tubular member 31 of the example and has the common structure, so that the common parts are referred to with the same reference signs, and the descriptions thereof are omitted here. The tubular member 51 is arranged in the nozzle connection port 15 in the head 13 to communicate with the outlet 110 of the mixture transfer line and extend out of the nozzle connection port 15.

The nozzle attachment 54 is composed of annular fixing portion 52 fixed in the nozzle connection port 15 in the handpiece body 1, and an annular guide portion 55 continuously and integrally formed with the fixing portion 52. The fixing portion 52 has extension 520 that fits in the nozzle connection port 15 adjacent to ring 313 of the tubular member 51, and slightly extends out of the nozzle connection port 15. The outer surface of the fixing portion 52 arranged, when assembled, in the nozzle connection port 15 is threaded, which threads 521 are screwed together with the threads 151 in the inner surface of the nozzle connection port 15 for securing. O-ring 522 is fit in the outer surface of the fixing portion 52 at a location corresponding to near the opening of the nozzle connection port 15. The fixing portion 52 has a double tube structure having tubular member receiving portion 523 in the center for rotatably receiving the tubular member 51 therein, and water channel 524 around the portion 523, and a water inlet (not shown)
for communication with the outlet 120 of the water transfer line in the inner surface of the nozzle connection port 15 is opened in part of the outer circumference of the fixing portion 52 (periphery of the upstream end in this embodiment) . The guide portion 55 is contiguous to the downstream-side of the extension 520 of the fixing portion 52 via flange 525 extending radially outwardly, has a diameter slightly larger than that of the fixing portion 52, and is in an annular form having a certain length. Guiding projection 553 is provided on the outer surface of the guide portion 55. Through the guide portion 55, the tubular member receiving portion 523 of the fixing portion 52 extends, around which the water channel 524 of the fixing portion 52 extends. The nozzle attachment 54 having the structure as discussed above is fixed in the nozzle connection port 15 by screwing together the threads 521 on the fixing portion 52 and the threads 151 in the nozzle connection port 15, with the extension 520 of the fixing portion 52 and the guide portion 55 contiguous thereto arranged outside the nozzle connection port 15. The tubular member 51 is inserted through the tubular member receiving portion 523 extending through the fixing portion 52 and the guide portion 55, and water is passed through the water channel 524 extending through the fixing portion 52 and the guide portion 55.

The nozzle attachment connector portion 208 formed in the connector portion 203 in the nozzle 2B has axial dent 204, in which the guide portion 55 of the nozzle attachment 54 rotatably fits. This guide dent 204, for this purpose, has a diameter substantially the same or slightly smaller than that of the guide portion 55. In substantially the center of the bottom of the guide dent 204, connecting portion 205 is formed convex, facing to the tubular member receiving portion 523, for connection with the tubular member receiving portion 523 of the nozzle attachment 54, and is in communication with the mixture channel 21 in the nozzle 2B. On the other hand, around the connecting portion 205, connecting portion 206 is formed concave, facing to the water channel 524, for connection with the water channel 524 of the nozzle attachment 54, and is in communication with the water channel 22 in the nozzle 2B. Along axially middle of the inner surface of the dent 204, circumferential guide groove 207 is provided that corresponds to and is engageable with the guiding projection 553 on the guide portion 55 of the nozzle attachment 54. For engaging the guiding projection 553 in the guide groove 207, engaging keyways are formed at two opposed positions in the inner surface of the dent 204, extending axially from the edge of the opening to the guide groove 207.

With such a structure, by inserting the guide portion 55 of the nozzle attachment 54 into the nozzle attachment connector portion 208 of the nozzle 2B, with various parts engaging with each other, the nozzle 2B is rotatably connected to the guide portion 55 of the nozzle attachment 54 by means of the engagement between the guide groove 207 and the guiding projection 553 so as not to be drawn out of the guide portion 55, with the flange 525 of the nozzle attachment 54 abutting the edge of the nozzle attachment connector portion 208. The connecting portion 205 for the mixture and the connecting portion 206 for water of the nozzle attachment connector portion 208 are connected with the tubular member receiving portion 523 and the water channel 524, respectively, of the nozzle attachment 54 to establish communication with the mixture channel 21 and the water channel 22 in the nozzle 2B for passage of the mixture and the water, respectively.

The connection between the handpiece body 1 and the nozzle 2B has such rotary means 3B wherein, in the nozzle connecting port 15 in the head 13 of the handpiece body, the fixing portion 52 of the nozzle attachment 54 is fixed, the guide portion 55 of which is fit in the nozzle attachment connector portion 208 of the nozzle 2B, to engage the guiding projection 553 in the guide groove 207. At the same time, the tubular member receiving portion 523 and the water channel 524 are registered with the connecting portions 205, 206, respectively, so that the tubular member 51 is brought into communication with the mixture channel 21 in the nozzle 2B through the tubular member receiving portion 523 of the nozzle attachment 54 and the connecting portion 205 of the nozzle attachment connector portion 208, while the water channel 524 of the nozzle attachment 54 is brought into communication with the water channel 22 in the nozzle 2B through the connecting portion 206 of the nozzle attachment connector portion 208.

By means of this connection, the tubular member 51 connected to the mixture outlet 110 in the nozzle connection port 15 in the handpiece body is inserted into and supported by the nozzle attachment 54, which is fixed in the nozzle connection port 15 and has the water channel 524 in communication with the outlet 120 of the water transfer line, and extends out of the nozzle connection port 15. The guide portion 55 of the nozzle attachment 54 arranged outside the nozzle connection port 15 is fit in the nozzle attachment connector portion 208 of the nozzle 2B with various parts registered with each other. The tubular member receiving portion 523 and the water channel 524 of the nozzle attachment 54 are connected to the connecting portions 205, 206, respectively, of the nozzle attachment connector portion 208 to bring the tubular member 51 in the tubular member receiving portion 523 and the water channel 524 into communication with the mixture channel 21 and the water channel 22, respectively, in the nozzle 2B. The guiding projection 553 of the guide portion 55 is engaged in the guide grove 207 in the nozzle attachment connector portion 208, to thereby rotatably connect the nozzle 2B on the outer surface of the guide portion 55 of the nozzle attachment 54. With this structure, the tubular member 51 forms part of the circuit for introducing the mixture into the mixture channel 21 in the nozzle 2B, whereas the water channel 524 of the nozzle attachment 54 arranged around the tubular member forms part of the circuit for introducing water into the water channel 22 in the nozzle 2B, so that the circuit for the mixture and the circuit for water are formed independently from each other. The nozzle 2B is manually rotatable for a desired angle around one of the two circuits, the tubular member, on the outer circumference of the guide portion 55 of the other of the circuits, the nozzle attachment 54. The connection between the nozzle attachment 54 and the nozzle attachment connector portion 208 of the nozzle 2B also has a sealing function to prevent leakage of air and water to outside.

In this way, the nozzle 2B is rotated manually and independently with respect to the handpiece body 1. Thus, when the nozzle 2B is moved along the tooth surface, the nozzle 2B may be adjusted to an appropriate angle with respect to the tooth surface by manually rotating the nozzle 2B.

Further, the mixture supplied through the mixture transfer line 11 in the handpiece body 1 is passed through the outlet 110 of the mixture transfer line in the head 13, the first and second pipes 311, 312 of the tubular member 51, and the mixture channel 21 in the nozzle 2B, and injected through the mixture injection port 210. On the other hand, the water supplied through the water transfer line 12 in the handpiece body 1 is passed through the outlet 120 of the water transfer line in the head 13, the water channel 524 in the nozzle attachment 54, and the water channel 22 in the nozzle 2B, and injected through the water injection port 220. The mixture injected through the mixture injection port 210 of the nozzle 2B is blown beyond the notch 23 under the guidance of the downstream slant face 232 of the notch 23 facing to the injection port 210, to ensure that the mixture is blown onto a particular area of the treatment site. The mixture injected through the mixture injection port 210 in the nozzle 2B is also ensured to flow spragingivally under the guidance of the upstream slant face 231 of the notch 23, in which the injection port 210 is opened, as well as the grooves 24 on both lateral faces of the nozzle 2B.

As discussed above, according to the dental handpiece having such a nozzle connection, the nozzle 2B is rotatably connected to the nozzle connection port 15 in the handpiece body 1 via the rotary means 3B composed of the tubular member 51, the nozzle attachment 54, and the nozzle attachment connector portion 208, so that when the nozzle 2B is moved along the tooth surface, the nozzle 2B may be adjusted to an appropriate angle with respect to the tooth surface by manually rotating the nozzle 2B. Consequently, the user is not required, in the subgingival treatment, to move the entire handpiece from side to side over a wide amplitude unlike the conventional handpiece, and the work efficiency in dental treatment is improved.

Incidentally, while in the example and the embodiment discussed above, the nozzle connection port 15 of the handpiece body 1 and the nozzle 2A, 2B are fixed together by means of threads 151, 321, 521, various other general fixing means other than the threads may also be used for the fixing between the nozzle connection port 15 and the nozzle 2A, 2B.
- 1: handpiece body
- 10: O-ring
- 11: mixture transfer line
- 110: outlet of mixture transfer line
- 12: water transfer line
- 120: outlet of water transfer line
- 13: head
- 14: upstream connection port
- 15: nozzle connection port
- 151: threads
- 16: blocking part
- 17: line for mixture
- 171: inlet
- 18: line for water
- 19: water channel
- 2A: nozzle
- 201: connector portion
- 202: nozzle body
- 21: channel for mixture
- 210: injection port for mixture
- 211: inlet for mixture
- 22: water channel
- 220: injection port for water
- 221: inlet for water
- 23: notch
- 231: upstream slant face
- 232: downstream slant face
- 24: groove
- 3A: rotary means
- 31: tubular member
- 311: first pipe
- 312: second pipe
- 313: ring
- 314: O-ring
- 32: fixing portion
- 321: threads
- 322: O-ring
- 323: tubular member receiving portion
- 324: water channel
- 325: flange
- 33: guide portion
- 330: hollow
- 34: mounting member
- 35: nozzle attachment
- 350: O-ring
- 351: flange
- 352: tubular member receiving portion
- 353: water channel
- 4: securing cover
- 401: opening
- 402: opening
- 2B: nozzle
- 203: connector portion
- 204: axial dent
- 205, 206: connecting portion
- 207: guide groove
- 208: nozzle attachment connector portion
- 3B: rotary means
- 51: tubular member
- 52: fixing portion
- 520: extension
- 521: threads
- 522: O-ring
- 523: tubular member receiving portion
- 524: water channel
- 525: flange
- 54: nozzle attachment
- 55: guide portion
- 553: guiding projection

## Claims

1. A dental handpiece for performing dental treatment by injecting a mixture of air and powder onto a tooth surface, said handpiece comprising a handpiece body (1) having a mixture transfer line (11) for transferring said mixture, and a nozzle (2B) connected to said handpiece body (1) for injecting said mixture transferred through said mixture transfer line (11), wherein said nozzle (2B) is rotatably connected to said handpiece body (1) via rotary means (3B), wherein said rotary means (3B) comprises: a tubular member (51) rotatably connected to the handpiece body (1) at one end and fixed to the nozzle (2B) at the other end, a nozzle attachment (54) fixed to the handpiece body (1) and receiving said tubular member (51) therethrough, and a nozzle attachment connector portion (208) formed integrally with said nozzle (2B), wherein said nozzle attachment connector portion (208) is formed in a connector portion (203) in said nozzle (2B), wherein said nozzle attachment (54) has a guide portion (55), and said nozzle attachment connector portion (208) has a guide dent (204), wherein a guiding projection (553) is provided on the outer surface of said guide portion (55), and a circumferential guide groove (207) is provided in the inner surface of said guide dent (204), and said guide portion (55) of the nozzle attachment (54) is rotatably fit in said guide dent (204) of the nozzle attachment connector portion (208) by means of engagement between said guide groove (207) in the nozzle attachment connector portion (208) and said guiding projection (553) of the guide portion (55), through engaging keyways formed at two opposite positions in the inner surface of the guide dent (204) and extending axially from an edge of an opening to the guide groove (207).

## Patentansprüche

1. Zahnärztliches Handstück zur Durchführung einer zahnärztlichen Behandlung durch Einspritzen einer Mischung aus Luft und Pulver auf eine Zahnoberfläche, wobei das Handstück einen Handstückkörper (1) umfasst, der eine Gemisch-Beförderungslinie (11) aufweist, um die Mischung zu befördern, und eine Düse (2B), die mit dem Handstückkörper (1) verbunden ist, um die Mischung, die durch die Gemisch-Beförderungslinie (11) befördert wurde, einzuspritzen, wobei die Düse (2B) drehbar mit dem Handstückkörper (1) über Drehmittel (3B) verbunden ist, wobei das Drehmittel (3B) umfasst: ein rohrförmiges Element (51), welches drehbar mit dem Handstückkörper (1) an einem Ende verbunden ist und an dem anderen Ende an der Düse (2B) befestigt ist, eine Düsenbefestigung (54), die an dem Handstückkörper (1) befestigt ist und das rohrförmige Element (51) dort hindurch aufnimmt, und einen Düsenbefestigungsverbinderbereich (208), der integral mit der Düse (2B) ausgebildet ist, wobei der Düsenbefestigungsverbinderbereich (208) in einem Verbinderbereich (203) in der Düse (2B) ausgebildet ist, wobei die Düsenbefestigung (54) einen Führungsbereich (55) hat, und der Düsenbefestigungsverbinderbereich (208) hat eine Führungskerbe (204), wobei ein Führungsvorsprung (553) an der Außenfläche des Führungsbereichs (55) vorgesehen ist, und eine umfängliche Führungsnut (207) ist in der Innenfläche der Führungskerbe (204) vorgesehen, und der Führungsbereich (55) der Düsenbefestigung (54) ist drehbar eingepasst in die Führungskerbe (204) des Düsenbefestigungsverbinderbereichs (208) mittels eines Eingriffs zwischen der Führungsnut (207) in dem Düsenbefestigungsverbinderbereich (208) und dem Führungsvorsprung (553) des Führungsbereichs (55), durch eingreifende Keilnuten, die an zwei gegenüberliegenden Positionen in der Innenfläche der Führungskerbe (204) gebildet sind und sich axial von einem Rand einer Öffnung zu der Führungsnut (207) erstrecken.

## Revendications

1. Pièce à main dentaire pour effectuer un traitement dentaire par injection d'un mélange d'air et de poudre sur une surface dentaire, ladite pièce à main comprenant un corps de pièce à main (1) ayant un conduit de transfert de mélange (11) pour transférer ledit mélange, et une buse (2B) connectée audit corps de pièce à main (1) pour injecter ledit mélange transféré par le biais dudit conduit de transfert de mélange (11), dans laquelle ladite buse (2B) est connectée de manière rotative audit corps de pièce à main (1) via un moyen rotatif (3B), dans laquelle ledit moyen rotatif (3B) comprend : un élément tubulaire (51) connecté de manière rotative au corps de pièce à main (1) à une extrémité et fixé à la buse (2B) à l'autre extrémité, une fixation de buse (54) fixée au corps de pièce à main (1) et recevant ledit élément tubulaire (51) dans celle-ci, et une partie connecteur de fixation de buse (208) formée d'une pièce avec ladite buse (2B), dans laquelle ladite partie connecteur de fixation de buse (208) est formée dans une partie connecteur (203) dans ladite buse (2B), dans laquelle ladite fixation de buse (54) a une partie guide (55), et ladite partie connecteur de fixation de buse (208) a une bosselure guide (204), dans laquelle une saillie de guidage (553) est prévue sur la surface externe de ladite partie guide (55), et une rainure guide circonférentielle (207) est prévue dans la surface interne de ladite bosselure guide (204), et ladite partie guide (55) de la fixation de buse (54) est ajustée de manière rotative dans ladite bosselure guide (204) de la partie connecteur de fixation de buse (208) au moyen d'un engagement entre ladite rainure guide (207) dans la partie connecteur de fixation de buse (208) et ladite saillie de guidage (553) de la partie guide (55), par le biais de rainures de clavette d'engagement formées à deux positions opposées dans la surface interne de la bosselure guide (204) et s'étendant axialement depuis un bord d'une ouverture jusqu'à la rainure guide (207).
